Europäisches Patentamt

European Patent Office

Office européen des brevets

(11) Publication number: **0 158 370**
**B1**

(12) **EUROPEAN PATENT SPECIFICATION**

(45) Date of publication of patent specification: **25.05.88**

(21) Application number: **85200041.3**

(22) Date of filing: **17.01.85**

(51) Int. Cl.⁴: **F 16 H 11/06**

(54) **Infinitely variable transmission.**

(30) Priority: **01.02.84 NL 8400296**

(43) Date of publication of application:
**16.10.85 Bulletin 85/42**

(45) Publication of the grant of the patent:
**25.05.88 Bulletin 88/21**

(84) Designated Contracting States:
**AT CH DE FR GB IT LI NL SE**

(56) References cited:
**EP-A-0 027 672**
**EP-A-0 095 132**
**EP-A-0 111 891**
**DE-A-2 518 496**
**FR-A-2 340 486**
**FR-A-2 464 852**
**NL-A-7 708 538**

(73) Proprietor: **Van Doorne's Transmissie B.V.**
**Dr. Hub van Doorneweg 120 Postbus 500**
**NL-5026 RA Tilburg (NL)**

(72) Inventor: **Cadée, Theodorus Petrus Maria**
**Pastoor de Beeckstraat 11**
**NL-5051 TJ Goirle (NL)**

(74) Representative: **Timmermans, Anthonius C.Th.,**
**Ir. et al**
**European Patent Attorneys Octrooibureau Zuid**
**P.O. Box 2287**
**NL-5600 CG Eindhoven (NL)**

## Description

The invention relates to an infinitely variable transmission for a device as specified in the first part of Claim 1.

Such a device has been proposed and described in FR—A—2464852.

To this end, the first control valve reduces the fluid pressure which has been raised by a pump and the resultant reduced fluid pressure prevails in one of the operating cylinders for the adjustment of the tension of the driving belt. The other operating cylinder is supplied with fluid by a second control valve which transmits the reduced fluid pressure to or from that operating cylinder in order that, depending on a control signal, the transmission ratio may be adjusted by means of a certain position of the said operating cylinder.

The tension in the endless transmission member must be sufficient under all conditions to transmit the torque of the engine without any slip. As this tension is, in the equilibrium position, determined in the driven pulley it is essential that the fluid pressure governing the pinching force between the pulley sheaves should at all times have a sufficient value under various conditions, of which the adjusted transmission ratio and the power to be transmitted, among other things, are significant. Accordingly, the control system provides a certain fluid pressure by means of the valves. This fluid pressure must, however, be higher than under normal, more or less constant load conditions in order to ensure non-slip operation in the case of extreme changes, for instance upon fierce acceleration if the device is intended for the propulsion of a vehicle. To safeguard against the occurrence of slip upon extreme changes, it has up to now been accepted practice to adjust the fluid pressure and hence also the pinching force in the driven pulley to a higher value than is required with the normal, more or less constant load. The tension in the transmission member (driving belt) is correspondingly higher, which may have an adverse effect on, for instance, performance and durability.

It is an object of the present invention to further develop the generic device. A device according to the invention comprises the features as pointed out in Claim 1.

It is known that when the fuel supply to an internal-combustion engine is increased, the pressure of the gas drawn in by the engine (in the manifold) rises, which is generally denoted by the expression "the vacuum becomes lower" because the pressure in the manifold is virtually always a partial vacuum. It is this lowering of the vacuum which is utilized in a device according to the invention. Thus there is no need to adjust the tension of the driving member to the highest requisite value (for instance, with fierce acceleration). According to the invention, the tension of the driving member can be allowed to depend on the instantaneous load, with the vacuum being used as a signal.

The conversion of this pressure in the engine manifold into a pressure rise or drop, respectively, for the driven pulley is realized such that use is made of a third control valve which incorporates a sleeve that is moveable under the influence of a change in the pressure of the gas drawn in by the engine (partial vacuum), the said sleeve closing or opening ports in the fluid circuit supplying the pressure for operation of the first valve.

The invention will now be elucidated with reference to a drawing of an embodiment with a third control valve.

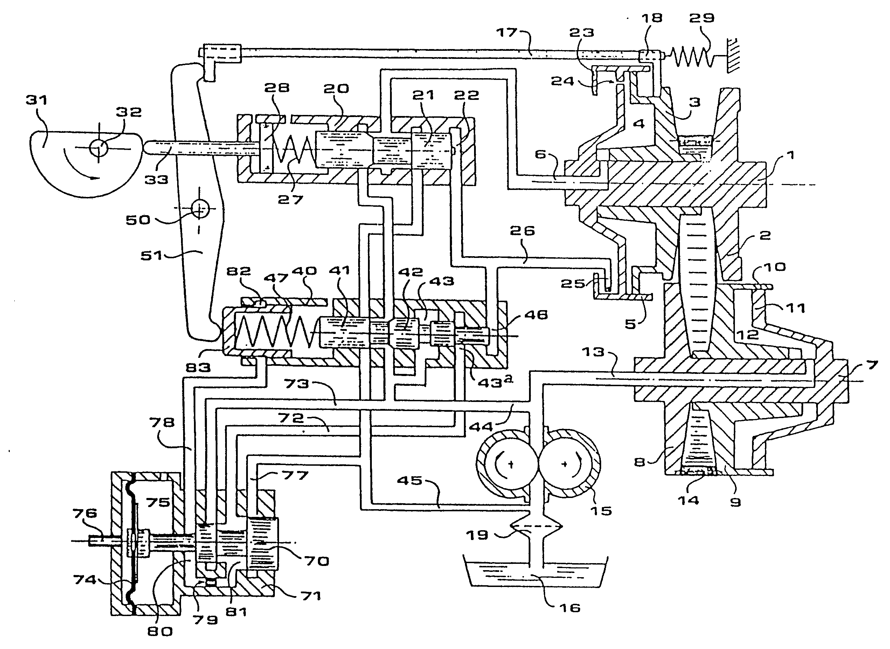

The embodiment schematically represented in the drawing comprises a primary or input shaft 1 provided with a fixed sheave and an axially displaceable conical sheave (2 and 3, respectively) which together form the primary pulley. Sheave 3 acts as piston of cylinder 5 which includes a cylindrical space 4 and can be displaced axially by the supply and discharge of fluid through line 6. Also present is a secondary or output shaft 7, likewise provided with a fixed and an axially displaceable conical sheave (8 and 9, respectively) which together form the secondary pulley. Sheave 9 is provided with a cylindrical rim 10 which accommodates piston 11 (rigidly attached to the secondary shaft 7) closing the cylindrical space 12 and provided with a passage 13.

A V-belt 14 (endless transmission member) is looped round the primary and the secondary pulley. This may be, for instance, a driving belt made in a synthetic material, whether or not reinforced, or a metallic one. By the axial displacement of the conical sheaves 3 and 9 the running diameters of belt 14 about the two pulleys can be changed such that the difference in rotation speed of shafts 1 and 7 can be varied infinitely. The fluid pressure in cylinder space 12 also results in the requisite tension being present in the belt 14.

The embodiment further comprises a fluid pump 15 for drawing in and pressurizing fluid from a reservoir 16 via a filter 19.

For sensing the actual transmission ratio, a rod 17 is provided which rests against the axially displaceable sheave 3 by means of a sensor shoe 18 under the influence of a tension spring 29. Depending on the transmission ratio, the rod 17 is displaced in axial direction.

Also, a first valve 40 is present which acts as overflow valve for controlling the fluid pressure built up by pump 15, which fluid pressure also prevails in cylinder space 12. The valve 40 is fitted with an axially displaceable sleeve 41. Since this sleeve 41 is provided with a widened part 42 which is in contact with the fluid in space 43 supplied by the pump 15, a pressure build-up will cause the sleeve 41 to move to the left (in the drawing). The fluid pressure increase in the space 43a is dependent on the position of sleeve 70 in a third control valve 71. As appears from the drawing, this valve has ports which provide access through lines 72 and 73 to space 43a and fluid pressure line 44, respectively. The movement of the sleeve 70 is governed by the displacement of diaphragm 74 in chamber 75 which communicates through line 76 with an inlet manifold of the internal-combustion engine and by the effective fluid pressure in chamber 81. As a result, equilibrium is attained between the vacuum and the fluid pressure. As the throttle of the engine is opened the gas pressure to the left of the diaphragm (lower vacuum) rises and the diaphragm moves to the right, thereby also displacing the sleeve 70 to the right. In consequence, the connection between the lines 72 and 73 is closed and port 77, which interconnects with the fluid return line 45, is opened. The pressure in space 43a thereby drops, sleeve 41 moves to the right and the connection of line 44 to the return line 45 in valve 40 is closed. The pressure in line 44 will then rise and hence also the pressure in space 12 of the driven pulley. On account of this pressure increase, the pinching force exerted on the endless transmission member 14 will increase.

In the special embodiment of the invention depicted in the drawing, on the diaphragm side of the sleeve 70 a chamber 80 is provided which communicates on the one hand through a narrow passage 79 with chamber 81 and hence with line 72 which links up with space 43a and on the other hand through line 78 with a port in an annular chamber 82 situated on the left-hand side of valve 40. This port in the annular chamber 82 may be opened or closed to the surrounding space by a movable cylindrical tube 83 which accommodates spring 47 and whose diameter on the left-hand side is smaller than the bore of valve 40.

The interplay of the third valve 71, the cylindrical tube 83, the annular chamber 82 and the line 78 makes it possible to obtain a greater decrease of the pinching force in the secondary pulley at low transmission ratios than at high transmission ratios.

Sleeve 41, which controls the fluid pressure supplied by pump 15, is also influenced in known manner by the input speed of shaft 1. For sensing this speed, cylinder 5 is fitted with an annular channel 23 which is filled with fluid from cylindrical space 4 via a passage 24. By means of a pitot tube 25, the fluid in channel 23 rotating with the primary shaft 1 is converted into a fluid prssure, which is passed on through line 26 to space 46 in which the fluid pressure therefore depends on the speed of the primary shaft 1.

At its other end, sleeve 41 is loaded by the compression of spring 47 which is tensioned through rod 17 and lever 51 rotating about axis 50, depending on the actual transmission ratio. It will be clear that in this manner the pinching force in the belt 14 is controlled through the fluid pressure in the cylindrical space 12 as a function of input speed, transmission ratio and engine vacuum.

In known manner the transmission ratio of the infinitely variable transmission is controlled by means of valve 20, which is provided with an axially displaceable pilot sleeve 21. On one side, pilot sleeve 21 is loaded by the fluid pressure in space 22, which fluid pressure depends on the primary or input speed of shaft 1.

On the other side, pilot sleeve 21 is loaded by the compression of a spring 27 which is tensioned by means of an actuation member 28. To this end, the actuation member 28 can be displaced in axial direction by rotation about an axis 32 of a cam 31 against which cam follower 33 of the actuation member 28 rests.

## Claims

1. An infinitely variable transmission for a device with an internal combustion engine, provided with an endless transmission member (14) which has been looped over a driven and a driving pulley, each having a groove situated between conical sheaves (2, 3 and 8, 9), at least one of which in each pulley is axially displaceable through an associated hydraulic cylinder (4, 12) provided with a first control valve (40) for regulation of fluid pressure in the cylinder (12) of the driven pulley and a fluid pressure line (44) to a second control valve (20), the latter valve being intended for adjustment of the transmission ratio by regulation of the amount of fluid supplied to and discharged from the cylinder (4) of the driving pulley to a fluid return line (45) and also provided with a third control valve (71) for regulating the fluid pressure in dependence on pressure in an intake of the engine, said first control valve (40) having a movable sleeve (41) for opening and closing a connection between the fluid pressure line (44) and the fluid return line (45) characterized in that said first control valve and said second control valve are both influenced by the speed of the driving pulley in known manner and in that said third valve (71) has a movable sleeve (70) and is provided with ports which can be opened or closed through the displacement of said sleeve (70) due to variation of the pressure in the intake of the engine, said ports being connected to the fluid pressure line (44) and the fluid return line (45) and to ports in the first control valve (40) in such a manner that when the pressure in the intake of the engine rises (a lower vacuum) the sleeve (41) in the first control valve (40) is displaced and closes the connection between the fluid pressure line (44) and the fluid return line (45) due to which the fluid pressure in the cylinder (12) of the driven pulley rises resulting in an increase of the pinching force on the endless transmission member (14).

2. An infinitely variable transmission for a device according to Claim 1, characterized in that the third valve (71) has an additional port which can be closed or opened by the movable sleeve (70) and which communicates via a line (78) with a port in the first valve (40) which can be closed or opened by a movable tube (83) which cooperates with the sleeve (41) in the first valve (40).

## Patentansprüche

1. Stufenlos verstellbares Getriebe für eine Vorrichtung mit Verbrennungsmotor, versehen mit einem endlosen Übertragungsorgan (14), das über eine antreibende und eine angetriebene Riemenscheibe läuft, welche jeweils eine zwischen kegelförmigen Riemenscheiben (2, 3 und 8, 9) gelegene Laufrinne umfassen, von denen in jeder Riemenscheibe wenigstens eine axial verstellbar ist mittels eines zugehörigen hydraulischen Zylinders (4, 12) und weiter versehen mit einem ersten Regelventil (40) zur Regelung von Flüssigkeitsdruck im Zylinder (12) der angetriebenen Riemenscheibe und mit einer Flüssigkeitsdruckleitung (44) zu einem zweiten Regelventil (20), welches letztere Ventil zur Einstellung des Übersetzungsverhältnisses dient, indem die Flüssigkeitsmenge geregelt wird, die dem Zylinder (4) der antreibenden Riemenscheibe zugeleitet wird und abgeleitet wird, zu einer Flüssigkeitsrückfuhrleitung (45), und weiter versehen mit einem dritten Regelventl (71) zur Regelung des Flüssigkeitsdrucks als Funktion des Drucks in einem Einlaß des Motors und bei dem das erste Regelventil (40) einem beweglichen Schieber (41) zum Öffnen und Schließen einer Verbindung zwischen der Flüssigkeitsdruckleitung (44) und der Flüssigkeitsrückfuhrleitung (45), hat, dadurch gekennzeichnet, daß das erste Regelventil und das zweite Regelventil beide, auf an sich bekannte Weise, von der Geschwindigkeit der antreibenden Riemenscheibe beeinflußt werden, und daß das dritte Regelventil (71), einen beweglichen Schieber (70) hat und mit Toren versehen ist, die sich durch Verschieben des Schiebers (70) infolge der Änderung des Drucks im Einlaß des Motors öffnen und schießen lassen, welche Tore mit der Flüssigkeitsdruckleitung (44) und der Flüssigkeitsrückfuhrleitung (45) und mit Toren in dem ersten Regelventil (40) in Verbindung stehen, in der Weise, daß bei Zunahme des Drucks im Einlaß des Motors (ein niedrigeres Vakuum) der Schieber (41) in dem ersten Regelventil (40) verschoben wird und die Verbindung zwischen der Flüssigkeitsdruckleitung (44) und der Flüssigkeitsrückfuhrleitung (45) schließt, wodurch der Flüssigkeitsdruck im Zylinder (12) der angetriebenen Riemenscheibe ansteigt, was zu einer Vergrößerung der Kneifkraft auf das endlose Übertragungsorgan (14) führt.

2. Stufenlos verstellbaress Getriebe für eine Vorrichtung nach Anspruch 1, dadurch gekennzeichnet, daß das dritte Ventil (71) ein zusätzliches Tor hat, das durch den beweglichen Schieber (70) geschlossen beziehungsweise geöffnet werden kann und das über eine Leitung (78) mit einem Tor in dem ersten Ventil (40) in Verbindung steht, das durch eine verstellbare Buchse (83), die mit dem Schieber (41) in dem ersten Ventil (40) zusammenarbeitet, geschlossen beziehungsweise geöffnet werden kann.

## Revendications

1. Transmission variable sans paliers pour un dispositif avec moteur à combustion, pourvue d'un organe de transmision sans fin (14) qui court sur une poulie d'entrainement et une poulie entrainée, chacune de ces poulies possédant une gorge située entre des disques coniques (2, 3 et 8, 9), dont au moins un dans chaque poulie est déplaçable axialement par l'action d'un cylindre hydraulique correspondant (4, 12) et est en outre équipé d'une part d'une première valve de réglage (40) pour la pression de liquide dans le cylindre (12) de la poulie entrainée, et d'une conduite de pression de liquide (44) vers une seconde valve de réglage (20), cette dernière valve servant à établir le rapport de transmission par le réglage de la quantité de liquide envoyé au cylindre (4) de la poulie d'entrainement ou évacuée de celui-ci vers une conduite de retour de liquide (45), et d'autre part d'une troisième valve de réglage (71) pour la pression de liquide en fonction de la pression dans une admission du moteur, la première valve de réglage (40) ayant un tiroir mobile (41) pour ouvrir et fermer une connexion entre la conduite de pression de liquide (41) et la conduite de retour de liquide (45), caractérisé par ce que, la première et la deuxième valve de réglage sont toutes deux influencées, d'une façon connue en soi, par la vitesse de la poulie d'entrainement, et que la troisième valve de réglage (71) possède un tiroir mobile (70) et est munie de fenêtres qui peuvent être ouvertes et fermées par le déplacement du tiroir (70) consécutif à une modification de la pression dans l'admission du moteur, lesquelles fenêtres sont connectés aux conduites de pression de liquide (44) et de retour de liquide (45) et à des fenêtres dans la première valve de réglage (40), de telle sorte que lors d'une augmentation de la pression dans l'admission du moteur (un vide plus réduit) le tiroir (41) dans le premier cylindre de réglage (40) est déplacé et la connexion entre la conduite de pression de liquide (44) et que la conduite de retour de liquide (45) se ferme, à la suite de quoi la pression de liquide dans le cylindre (12) de la poulie entrainée augmente, avec pour résultat une augmentation de la force de pincement sur l'organe de transmission sans fin (14).

2. Transmission variable sans paliers pour un dispositif selon la revendication 1, caractérisé par ce que la troisième valve (71) possède une fenêtre supplémentaire qui peut être ouverte ou fermée par le tiroir (70), et se trouve en connexion par une conduite (78) avec une fenêtre dans la première valve (40) qui peut être ouverte ou fermée par un manchon déplaçable (83), coopérant lui-même avec le tiroir (41) dans la première valve (40).